(19) Europäisches Patentamt
European Patent Office
Office européen des brevets

(11) **EP 4 287 052 A1**

(12) **DEMANDE DE BREVET EUROPEEN**

(43) Date de publication:
**06.12.2023 Bulletin 2023/49**

(21) Numéro de dépôt: **23173843.6**

(22) Date de dépôt: **17.05.2023**

(51) Classification Internationale des Brevets (IPC):
**G06F 21/56** *(2013.01)* **G06F 21/60** *(2013.01)*
**G06F 21/62** *(2013.01)*

(52) Classification Coopérative des Brevets (CPC):
**G06F 21/604; G06F 21/629;** G06F 2221/2149

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **31.05.2022 FR 2205213**

(71) Demandeur: **Orange**
**92130 Issy-les-Moulineaux (FR)**

(72) Inventeurs:
• **MEZGHANI, Emna**
**92326 Chatillon Cedex (FR)**
• **BRUN, Arnaud**
**92326 Chatillon Cedex (FR)**

(74) Mandataire: **Cabinet Beau de Loménie**
**158, rue de l'Université**
**75340 Paris Cedex 07 (FR)**

(54) **PROCÉDÉ ET DISPOSITIF DE GÉNÉRATION D'ALERTE**

(57) L'invention concerne un dispositif et un procédé d'alerte. Le procédé est mis en oeuvre dans un dispositif électronique et comprend:
- une réception, sur au moins une fenêtre temporelle, d'une pluralité de requêtes d'accès à des contenus,
- une génération d'une alerte fonction au moins d'une fréquence de changement de catégorie de contenu entre des contenus associés à au moins deux desdites requêtes et/ou du temps écoulé entre deux desdites requêtes.

[Fig. 6]

**Description**

Domaine Technique

La présente invention se rapporte au domaine du contrôle d'accès à des contenus.

Technique antérieure

De nombreuses solutions de contrôle d'accès aux contenus, et notamment au contenu en ligne, ont été développées, notamment des solutions de contrôle parental pour éviter aux jeunes enfants ou aux adolescents, d'accéder à du contenu en ligne qui leur serait nuisible. Il est notamment connu de restreindre l'accès aux terminaux ou aux applications logées sur, ou accessibles par, ces terminaux par mot de passe. Il est également connu de ne pas autoriser l'accès à certains sites internet pour des jeunes enfants en créant des listes de sites non autorisés, et donc bloqués lorsque l'enfant essaie d'y accéder. La tenue à jour de telles listes devient très difficile, vu la multiplicité des sites et l'impossibilité de tous les lister. De plus, les solutions existantes nécessitent souvent de transmettre des informations personnelles sur les utilisateurs d'un foyer à l'extérieur du foyer (pour traitement par un serveur distant par exemple) et génèrent des risques de vol de données. Lorsque des terminaux sont partagés par plusieurs utilisateurs, ce qui est souvent le cas de tablettes par exemple, il est d'autant plus difficile de contrôler l'usage qu'en font les enfants et les adolescents car bien souvent ces dispositifs sont en accès libre et les dispositifs comme les applications qui y sont installées, ne sont pas accessibles par mot de passe. Il existe donc un besoin pour contrôler l'accès à des données.

Exposé de l'invention

L'invention propose de pallier au moins un inconvénient de l'art antérieur en proposant un procédé d'alerte mis en oeuvre dans un dispositif électronique comprenant:

- une réception, sur au moins une fenêtre temporelle, d'une pluralité de requêtes d'accès à des contenus,
- une génération d'une alerte fonction au moins d'une fréquence de changement de catégorie de contenu entre des contenus associés à au moins deux desdites requêtes et/ou du temps écoulé entre deux desdites requêtes.

Selon au moins un mode de réalisation, ladite fenêtre temporelle ne comprend pas de période d'inactivité dudit dispositif électronique.

Selon au moins un mode de réalisation, le procédé comprend

- la détermination d'au moins un modèle, fonction desdites catégories, de fréquences de changement d'une catégorie à une autre de requêtes d'accès à du contenu, et/ou du temps écoulé entre deux requêtes,
- la génération d'une alerte étant déterminée à partir dudit au moins un modèle et desdites requêtes reçues sur ladite au moins une fenêtre temporelle.

Selon au moins un mode de réalisation,

- lesdites requêtes sont émises par un terminal et ladite alerte est relative à au moins un accès d'un utilisateur dudit terminal pendant ladite au moins une période temporelle,
- lesdits modèles sont associés à un profil utilisateur,
- ladite génération d'une alerte prend en compte un profil de l'utilisateur du terminal basé sur des informations de séquencement desdites requêtes reçues préalablement à, ou pendant, ladite période temporelle

Selon au moins un mode de réalisation ladite génération d'une alerte tient au moins compte d'une distance entre ledit au moins un modèle et ledit séquencement desdites requêtes reçues pendant ladite période temporelle.

Selon au moins un mode de réalisation, ledit profil utilisateur est lié à l'âge ou/et à la fonction dudit utilisateur et lesdites catégories sont liées à l'âge ou à la fonction dudit utilisateur, lesdites catégories étant paramétrables.

Selon au moins un mode de réalisation, la génération d'une alerte comprend un ou plusieurs parmi :

- une transmission d'au moins une notification à un terminal ayant émis lesdites requêtes,
- une transmission d'au moins une notification à un terminal administrateur différent dudit terminal ayant émis les requêtes,

lesdites notifications pouvant être transmises sous une ou plusieurs formes choisies parmi :

- un message texte,
- un courrier électronique,
- un message destiné à être affiché sur un terminal,
- un message destiné à une application enregistrée sur un terminal.

Selon au moins un mode de réalisation, ladite réception et ladite génération d'une alerte sont effectuées sur une pluralité de fenêtres temporelles, ladite transmission d'au moins une notification étant déclenchée suite à la génération d'une alerte sur au moins deux fenêtres temporelles.

Selon au moins un mode de réalisation, la génération d'une alerte comprend l'enregistrement d'une information relative à ladite alerte dans ledit dispositif et/ou dans un dispositif distant.

Les caractéristiques, présentées isolément dans la présente demande en lien avec certains modes de réalisation du procédé de la présente demande peuvent être combinées entre elles selon d'autres modes de réalisation du présent procédé.

La présente invention concerne également un programme d'ordinateur comprenant des instructions pour l'exécution des étapes du procédé selon l'invention, selon l'un quelconque de ses modes de réalisations, lorsque ledit programme est exécuté par un ordinateur.

La présente invention concerne également un support d'enregistrement lisible par un ordinateur sur lequel est enregistré un programme d'ordinateur comprenant des instructions pour l'exécution des étapes du procédé selon l'invention, selon l'un quelconque de ses modes de réalisations.

La présente invention concerne également un dispositif de génération d'une alerte comprenant un ou plusieurs processeurs configurés ensemble ou séparément pour instructions pour l'exécution des étapes du procédé selon l'invention, selon l'un quelconque de ses modes de réalisations. Ainsi, la présente invention concerne également un dispositif de génération d'une alerte comprenant un ou plusieurs processeurs configurés ensemble ou séparément pour:

- recevoir, sur au moins une fenêtre temporelle, une pluralité de requêtes d'accès à des contenus,
- générer une alerte fonction au moins d'une fréquence de changement de catégorie de contenu entre des contenus associés à au moins deux desdites requêtes et/ou du temps écoulé entre deux desdites requêtes.

Brève description des dessins

D'autres caractéristiques et avantages de la présente invention ressortiront de la description faite ci-dessous, en référence aux dessins annexes qui en illustrent un exemple de réalisation dépourvu de tout caractère limitatif.

[Fig. 1A-1D] Les figures 1A à 1D représentent des exemples de requêtes de contenus de différentes catégories par des utilisateurs,

[Fig. 2] La figure 2 représente un système selon certains modes de réalisation de la présente invention,

[Fig. 3] La figure 3 représente schématiquement un exemple d'architecture matérielle d'un dispositif apte à mettre en oeuvre l'invention, selon certains modes de réalisation,

[FIG 4] La figure 4 représente schématiquement une décomposition fonctionnelle d'un dispositif apte à mettre en oeuvre l'invention selon certains modes de réalisation,

[Fig. 5A-5F] Les figures 5A à 5F représentent des exemples de modèles selon certains modes de réalisation de l'invention,

[FIG 6] La figure 6 représente un procédé selon certains modes de réalisation de l'invention.

Description des modes de réalisation

La présente divulgation se place dans le contexte de la détection de comportements suspects d'utilisateurs. Plus particulièrement, mais non limitativement, la présente divulgation peut aider à améliorer le contrôle parental. Ainsi, elle peut aider à la détection de requête d'accès à des contenus adultes par des enfants utilisateur d'un terminal comme un terminal partagé.

Selon la présente divulgation, un comportement suspect signifie une utilisation inattendue de la part d'un utilisateur courant d'un terminal (ie une utilisation ne correspondant pas à une utilisation prévue, ou autorisée, par un administrateur ou utilisateur principal du terminal). Ainsi, un exemple de comportement suspect peut être un accès, ou une demande d'accès, à du contenu et/ou à des fonctions non adaptées à l'utilisateur courant ou au profil de l'utilisateur courant. Par fonction, on peut aussi entendre ici, par exemple, des fonctions de paiement, des fonctions de discussion en ligne (« chat » en anglais), de consultation de réseaux sociaux. Par contenu, on peut entendre du contenu vidéo ou audio, mais aussi l'accès à des réseaux sociaux. Un comportement suspect peut aussi être au moins un accès prolongé à au moins un certain type de contenu. Par exemple, des parents peuvent vouloir restreindre l'accès à des sites internet de jeu ou applications de jeu à leurs enfants, en termes de temps de jeu. Un comportement suspect pour un enfant peut alors être lié à une utilisation prolongée, au-delà du temps maximal autorisé par les parents.

Selon la présente invention, par requête, on entend par exemple des requêtes de type DNS (en anglais « Domain Name System ») et plus généralement des accès à des contenus enregistrés ou disponibles en ligne, via des sites internet par exemple. On entend aussi un accès à des applications. Des applications sont souvent installées sur des terminaux tels des tablettes et permettent l'accès à différents contenus et/ou permettent également de jouer, de payer en ligne, voire d'effectuer d'autres actions.

Selon certains modes de réalisation, la présente invention peut également permettre de détecter l'accès à certains contenus, par exemple dans le domaine professionnel ou sur des terminaux publics, sur lesquels les utilisateurs n'ont pas besoin de s'identifier personnellement préalablement à l'utilisation.

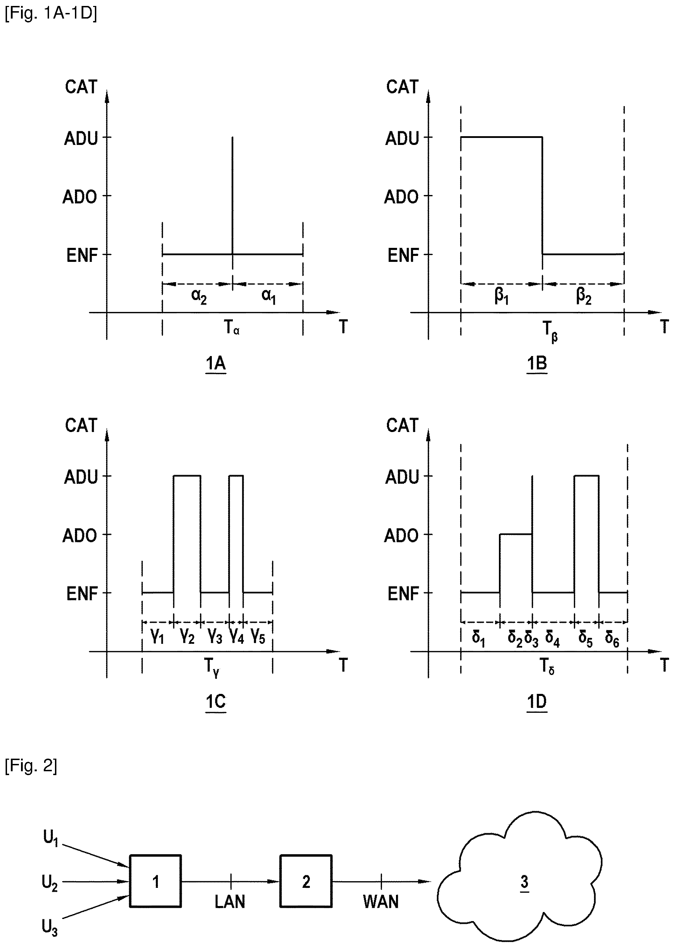

Les figures 1A-1D illustrent des modes de réalisation mis en oeuvre dans le cas du contrôle parental et représentent différentes requêtes à des contenus par un utilisateur d'un terminal. Ce terminal peut être un terminal partagé mais pas uniquement. Par terminal partagé, on entend un terminal susceptible d'être utilisé tour à tour par plusieurs utilisateurs, par exemple lorsque le terminal ne nécessite pas d'authentification par l'utilisateur lors de son utilisation. En général, des systèmes de contrôle parental peuvent être associés à des profils utilisateurs enfant sur des ordinateurs. Sur les dispositifs nomades tels des tablettes, des téléviseurs connectés, voire des téléphones mobiles, il est fréquent qu'aucune authentification ne soit nécessaire pour l'utilisation. En général, ces terminaux sont accessibles à tous dans un contexte familial par exemple et ce sont des dispositifs partagés au sens de la présente divulgation.

Ainsi, dans certains modes de réalisation, la présente divulgation propose de définir des catégories de contenu. Dans l'exemple illustré, relatif au contrôle parental, les catégories peuvent être liées à un âge des utilisateurs (par exemple associées chacune à une tranche d'âge).

Par exemple, il peut être défini trois catégories, « adulte », « adolescent » et « jeune enfant ». Ces catégories peuvent par exemple être associées aux tranches d'âge suivantes :

- jeune enfant : âge strictement inférieur à 13 ans,
- adolescent : entre 13 et 17 ans inclus,
- adulte : âge supérieur ou égal à 18 ans.

Les tranches d'âge et/ou les catégories peuvent par exemple être préalablement renseignées dans le système (par défaut par un constructeur du dispositif ou un fournisseur de programme informatique exécutant le procédé objet de la présente demande par exemple) et/ou peuvent être paramétrées, par un administrateur ou utilisateur principal (ou de confiance) (un parent par exemple).

Les figures 1A à 1D représentent des exemples de modèle de comportement suspects ou non suspects au sens de la présente divulgation. Ces figures représentent des requêtes de contenus associés à différentes catégories pendant des fenêtres temporelles, à partir d'un terminal partagé. Dans ces exemples et dans la suite de la description, on appelle durée transitoire une durée suffisamment courte, correspondant à quelques secondes par exemple (comme une, deux ou trois secondes par exemple) et une durée non transitoire une durée supérieure à 3 secondes. Lorsqu'un utilisateur fait une requête d'accès à du contenu pendant une durée transitoire, cette requête d'accès est considérée comme faite par inadvertance ou erreur. En effet, l'utilisateur n'a pas le temps de regarder le contenu pendant une durée si courte.

Sur les figures 1A à 1D, sur l'axe des ordonnées, la catégorie « adulte » est référencée ADU, la catégorie « enfant » est référencée ENF et la catégorie « adolescent » est référencée ADO. Le temps (T) est représenté sur l'axe des abscisses.

Sur les figures 1A à 1D, il est considéré que pendant la ou les fenêtres temporelles considérées, des requêtes sont faites de manière continue, c'est-à-dire que la fenêtre temporelle comprend des requêtes successives pendant une période d'activité du terminal. Ceci peut signifier qu'une nouvelle période temporelle démarre lorsque le terminal redevient actif après une période d'inactivité, c'est-à-dire que de nouvelles requêtes sont effectuées. Cependant, dans d'autres modes de réalisation, il peut être prévu que la fenêtre temporelle comprenne des périodes d'inactivité du terminal, c'est-à-dire des périodes pendant lesquelles aucune requête n'est reçue et aucune consultation (suite à une requête) n'est effectuée. La taille de la fenêtre temporelle peut être de l'ordre de quelques minutes ou de quelques dizaines de minutes, selon les modes de réalisation, par exemple 20 minutes. Dans certains modes de réalisation, elle est de taille paramétrable.

La figure 1A représente un premier exemple de requêtes pendant une fenêtre temporelle T. Pendant cette fenêtre temporelle $T_\alpha$, trois requêtes d'accès à des contenus de catégories différentes sont effectuées. Une première requête d'accès à du contenu de catégorie « enfant » est faite. Il est à noter que par requête on entend une première demande d'accès à du contenu suivie éventuellement d'une réception au moins partielle de ce contenu pendant un intervalle de temps. Le contenu peut par exemple être du contenu en streaming mais il peut aussi être du contenu issu d'un même site internet (comme différentes photographies disponibles sur un même site internet) ou de plusieurs sites internet. Comme indiqué précédemment, les requêtes peuvent être aussi des requêtes d'accès via une application, telles les applications disponibles sur des téléphones mobiles. Sur la figure 1A, par exemple pendant une durée $\alpha 1$, l'utilisateur fait une ou plusieurs requêtes à des contenus différents mais qui restent dans la catégorie « jeune enfant ». Puis après une durée très courte, l'utilisateur fait une requête vers une catégorie de type adulte. On constate que cette requête est temporaire et très courte en temps, durée considérée comme durée transitoire. Elle peut par exemple correspondre à une erreur de la part de l'utilisateur qui refait immédiatement une requête à un contenu enfant et reste sur du contenu enfant pendant une période de temps $\alpha 2$. Bien évidemment, les durées peuvent varier selon les exemples considérés. Ainsi, les durées $\alpha 1$ et $\alpha 2$ peuvent être par exemple des durées de l'ordre de 30s à plusieurs minutes, voire plusieurs heures. Le modèle de comportement représenté en figure 1A n'est pas considéré, au moins dans certains modes de réalisation, comme un comportement suspect au sens de la présente invention. En effet, le profil de l'utilisateur associé, c'est-à-dire l'utilisateur qui fait les requêtes de contenu, correspondant bien à celui d'un enfant puisque majoritairement le contenu accédé est du contenu enfant.

La figure 1B représente un second exemple de requêtes pendant une fenêtre temporelle $T_\beta$. Pendant

cette fenêtre temporelle $T_\beta$, une ou plusieurs requêtes à des contenus de catégories différentes sont effectuées. Pendant un premier intervalle de temps β1, d'une durée suffisamment longue pour ne pas considérer qu'il s'agit d'un accès à du contenu par inadvertance, soit supérieure à 5 secondes par exemple, une ou plusieurs requêtes à des contenus associés à la catégorie « adulte » sont faites. Le système détecte donc un comportement d'un utilisateur adulte. Puis, pendant un second intervalle de temps, β1, consécutif, une ou plusieurs requêtes d'accès à du contenu associé à la catégorie « enfant » sont faites. Un utilisateur adulte regarde rarement du contenu enfant pendant une période de temps assez longue, le système peut donc détecter ici un comportement suspect correspondant à un comportement d'un enfant qui a regardé du contenu adulte pendant la période β1. Cependant, un comportement tel que celui représenté sur cette figure, peut aussi correspondre à un changement d'utilisateur du terminal, comme par exemple un changement d'un utilisateur « adulte » vers un utilisateur « enfant ». Plusieurs changements successifs de la catégorie « adulte » vers « enfant » peuvent renforcer la détection d'un comportement suspect. Dans certains modes de réalisation, en fonction de la confiance de la détection, un score de confiance peut être calculé, comme indiqué par la suite, et une action différente en fonction du score de confiance peut être entreprise, à savoir par exemple l'envoi d'une notification soit au terminal suspecté soit à un terminal distant. Par exemple, si le score de confiance est faible, alors une alerte peut être transmise au terminal suspecté, et s'il est élevé alors une notification peut être transmise à un terminal distant.

La figure 1C représente un troisième exemple de requêtes pendant une fenêtre temporelle $T_\gamma$. Pendant cette fenêtre temporelle, une ou plusieurs requêtes à des contenus de catégories différentes sont effectuées. Pendant un premier intervalle de temps γ1, non transitoire, une ou plusieurs requêtes à du contenu associé à la catégorie « enfant » sont faites. Puis pendant un second intervalle de temps γ2, non transitoire, une ou plusieurs requêtes à du contenu associé à la catégorie « adulte » sont faites. Puis pendant un troisième intervalle de temps γ3, non transitoire, une ou plusieurs requêtes à du contenu associé à la catégorie « enfant » sont faites. Puis pendant un quatrième intervalle de temps γ4, non transitoire, une ou plusieurs requêtes à du contenu associé à la catégorie « adulte » sont faites. Puis pendant un cinquième intervalle de temps γ5, non transitoire, une ou plusieurs requêtes à du contenu associé à la catégorie « enfant » sont faites.

Le système va détecter un comportement suspect pendant l'intervalle de temps $T_\gamma$ car il est impossible de détecter si l'utilisateur qui fait les requêtes est un enfant ou un adulte. Il est fort possible également que le système puisse détecter un comportement « enfant » durant le premier intervalle de temps γ1 puis détecte un comportement « adulte » durant la période γ2. Ainsi immédiatement après la période γ2, le système est capable de déterminer qu'il s'agit d'un comportement suspect, celui d'un enfant regardant du contenu adulte. Les périodes d'observation γ3, γ4, γ5 viennent renforcer cette détection de comportement suspect.

La figure 1D représente un quatrième exemple de requêtes pendant une fenêtre temporelle $T_\delta$. Pendant cette fenêtre temporelle, une ou plusieurs requêtes à des contenus de catégories différentes sont effectuées. Pendant un premier intervalle de temps δ1, non transitoire, une ou plusieurs requêtes à du contenu associé à la catégorie « enfant » sont faites. Pendant un second intervalle de temps δ2, non transitoire, une ou plusieurs requêtes à du contenu associé à la catégorie « adolescent » sont faites. A l'issue de ces deux intervalles de temps, le système détecte difficilement quel est le profil utilisateur associé à l'utilisateur qui utilise le terminal, il peut s'agir d'un adolescent ou d'un enfant. Un tel profil peut cependant avoir été catégorisé par le système comme un profil suspect, celui d'un enfant qui regarderait du contenu adolescent. Dans un tel cas la détection d'un comportement suspect peut être réalisée dès la fin de l'intervalle de temps δ2. Si le profil observé pendant les deux intervalles de temps consécutifs δ1, δ2, n'est pas détecté comme suspect, la période d'observation peut se prolonger.

Dans un troisième intervalle de temps δ3, transitoire, une requête à du contenu adulte est effectuée mais très brièvement, pendant une à deux secondes par exemple, ce qui correspond à une erreur de la part de l'utilisateur, et à une requête faite par inadvertance à du contenu adulte. Puis, consécutivement à cet intervalle de temps δ3, une ou plusieurs requêtes à du contenu associé à la catégorie « enfant » sont faites pendant un intervalle de temps δ4, non transitoire. Le système peut déterminer ici que l'utilisateur du système partagé est probablement un enfant car les requêtes à du contenu enfant sont les plus importantes et les plus longues, à savoir les périodes δ1 et δ4. A l'issue de la période δ4, il peut donc être détecté un comportement suspect. Suite à la période δ4, non transitoire, une ou plusieurs requêtes à des contenus de catégorie « adulte » sont effectuées. A l'issue de la période δ5, le système détecte un comportement suspect car le comportement de l'utilisateur pendant les périodes δ1 à δ4 peut signifier que l'utilisateur est un enfant ou un adolescent, qui effectue des requêtes à du contenu adulte pendant la période δ5. Ceci peut en outre être éventuellement confirmé en prolongeant la période d'observation temporelle au-delà de δ5, pendant une période δ6. Pendant une période δ6, non transitoire, une ou plusieurs requêtes à du contenu enfant sont effectuées. Ceci permet de confirmer un profil utilisateur enfant et donc de détecter un comportement suspect.

Les exemples décrits en référence aux figures 1A à 1D illustrent la détection de comportement suspect pendant une période temporelle dont la durée peut dépendre éventuellement de la détection ou non d'un comportement suspect pendant cette durée. Dans certains modes de réalisation, tant qu'aucun comportement suspect n'a été déterminé, la période d'observation peut se prolonger et la fenêtre temporelle se poursuit. Dans certains modes de réalisation, il peut par exemple s'agir d'une fenêtre temporelle glissante comme évoquée ci-après.

Ainsi, selon les modes de réalisation, la longueur de la fenêtre temporelle peut être

- fixée, ou
- paramétrée ou
- activée tant que des requêtes sont émises ou
- activée tant que des requêtes sont émises et qu'aucune alerte n'a été générée.

Selon les exemples de la figure 1, il est montré des transitions uniquement entre des catégories permettant de détecter un comportement suspect. Selon d'autres modes de réalisation, les requêtes d'accès peuvent également être associées à du contenu non catégorisé ou dans des catégories qui ne permettent pas de détecter un comportement suspect. Ces requêtes peuvent être filtrées pour ne pas être prises en compte. Ainsi selon les exemples de la figure 1, il peut y avoir dans la fenêtre temporelle des requêtes vers des contenus non catégorisés ou catégorisés dans des catégories non utiles, entre les requêtes dans les catégories prises en compte par la présente divulgation.

La figure 2 représente un système pour la mise en oeuvre d'un mode de réalisation préféré de la présente divulgation.

Le système de la figure 2 comprend un terminal 1 connecté à une passerelle d'accès 2 au travers d'un premier réseau de type local, tel un réseau Ethernet, filaire ou non filaire, ou un réseau cellulaire par exemple. La passerelle d'accès 2 est connectée à un réseau externe, de type internet ou cellulaire, à des équipements réseau distants, situés ou gérés par un opérateur, par exemple un opérateur de télécommunications. Il est à noter que la passerelle d'accès est connectée en général à plusieurs dispositifs tels le dispositif 1, qui peuvent être partagée de type tablette ou téléphone mobile ou non partagés de type ordinateur personnel. Le terminal 1 peut être utilisé par n utilisateurs (n entier supérieur à 1). Parmi ces n utilisateurs, certains au moins peuvent être associés à des profils utilisateurs différents. Par exemple, dans un environnement domestique, ces profils peuvent comprendre un profil adulte, un profil adolescent, un profil enfant. Dans d'autres environnements, tels des environnements scolaires ou universitaires, ces profils peuvent comprendre par exemple un profil étudiant ou un profil enseignant par exemple. Le nombre de profils peut bien sûr varier selon les modes de réalisation.

Le terminal 1 est par exemple un terminal en libre-service dans son environnement, comme un terminal ne nécessitant pas de se connecter à un compte pour l'utiliser, typiquement une tablette, un téléviseur connecté... Ainsi, il peut être difficile de détecter automatiquement à tout instant quel est l'utilisateur du terminal et donc de détecter quel est le profil de l'utilisateur.

La présente divulgation permet avantageusement de déployer simplement une solution de contrôle d'accès à du contenu ou à des fonctions en ligne ou sur des serveurs non distants, à partir de terminaux et plus particulièrement dans des modes de réalisation, de générer une alerte suite au contrôle des requêtes d'accès à du contenu.

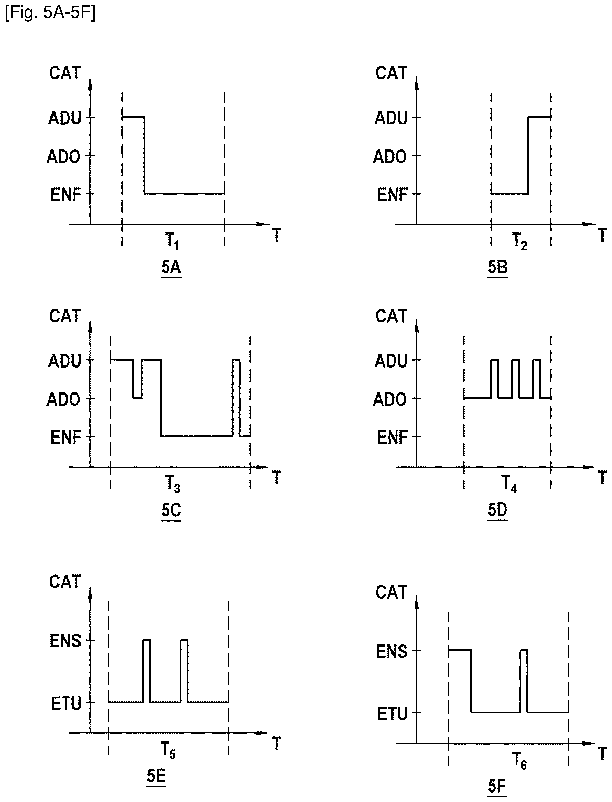

Le procédé objet de la présente demande, par exemple dans les modes de réalisation décrits en figure 5, peut par exemple être implémenté sur le terminal 1 ou sur la passerelle 2. Ceci présente l'avantage de ne pas avoir besoin de traiter des données personnelles à l'extérieur du réseau local à ou aux utilisateurs et protège donc leurs données personnelles.

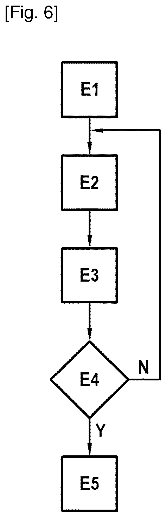

La figure 2 représente un exemple d'au moins une partie d'architecture matérielle 10 du terminal 1 ou de la passerelle 2, permettant l'implémentation d'un procédé selon la présente invention et tel que représenté par exemple en figure 6. Cette architecture matérielle est celle d'un ordinateur. D'autres éléments d'architecture matérielle sont présents dans le terminal 1 ou dans la passerelle 2 et non représentés ici.

L'architecture matérielle 10 comprend un ou plusieurs processeurs 21 (un seul est représenté sur la figure 2) mettant en oeuvre un procédé selon la présente divulgation, une mémoire morte 22 (de type « ROM »), une mémoire non volatile réinscriptible 23 (de type « EEPROM » ou « Flash NAND » par exemple), une mémoire volatile réinscriptible 24 (de type « RAM ») une interface de communication 25 avec la passerelle 2. La mémoire morte 22 constitue un support d'enregistrement conforme à un exemple de mode de réalisation de l'invention, lisible par le processeur ou les processeurs 21 et sur lequel est enregistré un programme d'ordinateur P1 conforme à un exemple de mode de réalisation de l'invention comportant des instructions pour l'exécution d'étapes du procédé de détection de comportement suspect selon l'invention. En variante, le programme d'ordinateur P1 est stocké dans la mémoire non volatile réinscriptible 23.

Le programme d'ordinateur P1 peut permettre au terminal 1 ou à la passerelle 2 de mettre en oeuvre au moins une partie du procédé conforme à la présente divulgation et tel qu'illustré par exemple en figure 5.

Ce programme d'ordinateur P1 peut ainsi définir des modules fonctionnels et logiciels, configurés pour mettre en oeuvre les étapes d'un procédé d'alerte conforme à un exemple de mode de réalisation de l'invention, ou au moins une partie de ces étapes. Ces modules fonctionnels s'appuient sur ou commandent les éléments matériels 21, 22, 23, 24, 25 du terminal 1 ou de la passerelle d'accès 2 cités précédemment.

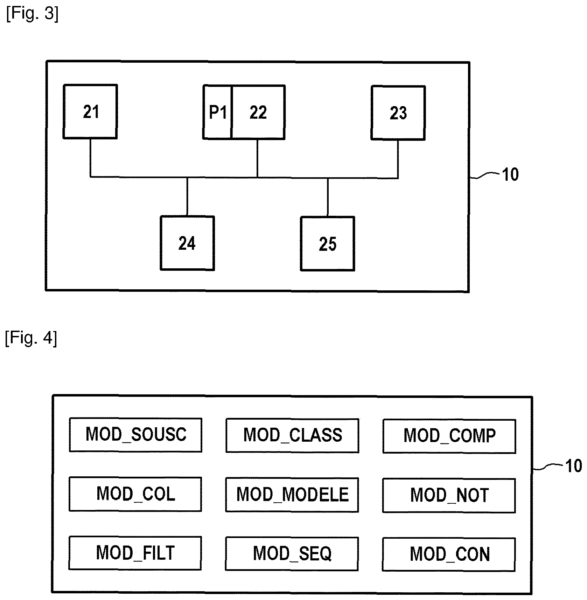

La figure 4 représente ces modules fonctionnels qui s'appuient ou commandent les éléments matériels 21 à 25 du dispositif cité précédemment. Certains de ces modules fonctionnels peuvent être optionnels dans certains modes de réalisation

**[0047]** , Dans l'exemple de la figure 4, les modules fonctionnels comprennent notamment :

- un module de souscription MOD_SOUSC configuré pour souscrire auprès d'un opérateur internet, un service de détection de comportement suspect. L'opérateur internet est par exemple un opérateur de télécommunication permettant l'accès au réseau externe aux terminaux présents sur le réseau local. Cet opérateur internet peut par exemple être également le fournisseur de la passerelle d'accès 2. La souscription peut également comprendre ou être suivie d'une déclaration de la composition du ou des groupes d'utilisateurs partageant au moins un terminal, ie des utilisateurs potentiels des terminaux connectés à la passerelle 2 dans l'exemple illustré. Cette déclaration peut comprendre, suivant le type d'environnement, une association à au moins un utilisateur potentiel d'une catégorie ou d'une fourniture d'informations permettant au système d'associer à l'utilisateur potentiel une catégorie. Dans un environnement domestique, des catégories par âge, par exemple, adulte, enfant, adolescent sont envisagées et peuvent être établies par l'obtention de l'âge, ou de la date de naissance des utilisateurs. Dans un environnement universitaire, il peut s'agir de catégorie par fonction, étudiant ou professeur par exemple. Cette déclaration peut être faite par un administrateur du réseau local. Lors de la souscription, la liste des terminaux peut également être déclarée ainsi, qu'optionnellement, le type des terminaux dans certains modes de réalisation.

Les modules fonctionnels peuvent comprennent également, dans certains modes de réalisation, un module de collecte des requêtes MOD_COL effectuées depuis au moins un des terminaux. Les requêtes d'accès au contenu sont des requêtes qui contiennent typiquement des adresses de contenu situés, soit à l'intérieur du réseau local, sur un autre dispositif connecté à la passerelle d'accès 2, un autre terminal ou un moyen de stockage par exemple, ou encore et plus généralement des contenus situés à distance, par exemple sur des sites internet ou des serveurs de flux de données (« streaming » en anglais). Les requêtes collectées peuvent être transmises à un module de filtrage MOD_FILT (autre module fonctionnel) qui permet de filtrer la collecte des requêtes reçues sur la passerelle 2. Ce module de filtrage peut être optionnel dans certains modes de réalisation.

Ce module de filtrage peut permettre dans certains modes de réalisation au procédé de ne considérer que les requêtes venant de certains terminaux. Ce module de filtrage est lié par exemple à un module de connaissance des terminaux connectés à la passerelle d'accès 2 MOD_CON, seulement présent dans la passerelle d'accès et représentant une liste des terminaux connectés à l'instant courant à la passerelle d'accès 2 et leur type. Dans certains modes de réalisation ce module de filtrage peut en outre sélectionner une partie des dispositifs parmi la pluralité de dispositifs. Cette sélection peut être paramétrée, par exemple par l'administrateur du réseau local. Dans ce cas, lorsque le procédé selon l'invention est implémenté dans les terminaux et non pas dans la passerelle d'accès, le module de filtrage peut ne pas filtrer les requêtes venant de certains terminaux.

Dans d'autres modes de réalisation, le module de filtrage peut également filtrer des requêtes d'accès à du contenu en fonction de la catégorie du contenu demandé. Par exemple, lorsqu'une catégorie de contenu est définie comme étant accessible par tous les utilisateurs, par exemple un site de météorologie, un site relatif à une ville...alors il peut être catégorisé (dans une catégorie supplémentaire par exemple) comme « tous utilisateurs » et ne pas faire partie des contenus pris en compte par ledit procédé.

Dans certains modes de réalisation, les modules fonctionnels peuvent comprendre également un module de séquencement MOD_SEQ associant à une requête un instant t à laquelle elle est effectuée. Cette association permet de déterminer des informations temporelles de séquencement des requêtes tel que décrit en figure 1.

Dans certains modes de fonctionnement, les modules fonctionnels peuvent comprendre également un module de classification MOD_CLASS. La classification du contenu consulté (catégorisation des sites/applications consultés) peut se faire de différentes manières en se basant sur :

- Une base de données qui recense tous les applications/sites avec une catégorisation, ceci nécessite des ressources pour le stockage et nécessite que la classification soit celle adaptée, à savoir contrôle parental (classification enfant/adolescent/parent) ou milieu scolaire (enseignant/étudiant), ou autre
- Un logiciel intelligent qui permet de classifier le contenu en analysant l'adresse internet (URL) encapsulée dans la requête DNS avec des techniques de filtrage, d'apprentissage et de langage naturel (NLP pour Natural Langage Processing). La phase d'apprentissage peut se faire en amont, par exemple chez l'opérateur auprès duquel le service a été souscrit et déployé ensuite dans un équipement chez l'utilisateur, au niveau des terminaux ou de la passerelle d'accès. L'opérateur peut également proposer des catégories qui correspondent au besoin de l'utilisateur qui a souscrit le service
- il peut également être envisagé dans d'autres modes de réalisation que l'utilisateur puisse apporter des informations de classification lui-même ou vienne modifier ou affiner les classifications proposées soit par l'opérateur, soit par le logiciel intelligent. Dans un tel cas, le module MOD_CLASS, peut par exemple sous la forme d'une interface homme-machine, permettre facilement à l'utilisateur d'intervenir sur la classification proposée ou d'affecter une classification. Le module peut également permettre l'affectation d'une classification à une application nouvellement installée (ou lors de l'installation de celle-ci) sur le terminal partagé. De manière générale la classification peut être faite de manière dynamique, soit de manière automatique ou manuelle, comme expliqué par les exemples précédents.

Les modules fonctionnels peuvent comprendre également, dans certains modes de réalisation, un module MOD_MODELE configuré pour établir des modèles définissant des comportements suspects pour un type d'utilisateur. Un modèle est défini par une séquence de requêtes à des instants, par exemple consécutifs, et associées chacune à une catégorie. Des exemples de modèles sont décrits ci-après en référence à la figure 5. Le module MOD_MODELE peut donc être personnalisé en fonction des catégories souhaitées. Les catégories sont donc paramétrables. Le module MOD_MODELE peut donc coopérer avec le module MOD_SOUSC pour obtenir les informations relatives aux utilisateurs et au service souscrit pour déterminer les catégories souhaitées utilisées pour l'établissement des modèles.

Les modules fonctionnels peuvent comprendre également un module MOD_COMP configuré pour comparer les séquences de requêtes transmises par l'utilisateur du terminal partagé et les modèles définis par le module MOD_MODELE afin de déterminer un comportement suspect.

Enfin, les modules fonctionnels peuvent comprendre un module MOD-NOT configuré pour transmettre une notification ou alarme à un dispositif pour signaler un comportement suspect. Cette notification peut être transmise à l'utilisateur du terminal partagé dont le comportement est détecté comme suspect pour l'avertir et/ou peut également être transmise à un administrateur du réseau ou à un utilisateur principal du terminal, par exemple le ou les parents dans le cas du contrôle parental, pour les avertir du comportement suspect. Dans ce cas, la notification peut être transmise sur un dispositif détenu par le parent, par exemple sur son téléphone portable ou son ordinateur personnel.

La figure 5 représente un ensemble d'exemples de modèles de comportements suspects tels que déterminés (détectés) par le module MOD_MODELE et utilisés par le procédé de la figure 6, dans certains de ces modes de réalisation. Bien entendu cet ensemble est donné à titre illustratif et ne correspond pas à une liste exhaustive des modèles de comportement suspect.

Sur les figures 5A à 5D, sur l'axe des ordonnées, la catégorie « adulte » est référencée ADU, la catégorie « enfant » est référencée ENF et la catégorie « adolescent » est référencée ADO. Sur les figures 5E et 5F, la catégorie « enseignant » est représentée par ENS et la catégorie « étudiant » est représentée par ETU. Le temps (T) est représenté sur l'axe des abscisses.

Le système selon la présente divulgation peut avoir préenregistré un ou plusieurs modèles, déterminés en fonction desdites catégories, des fréquences de changement d'une catégorie à une autre pour lesdites requêtes reçues, du temps écoulé entre deux requêtes reçues. Les modèles peuvent par exemple comprendre un ou plusieurs modèles tels que représentés en figures 5A à 5F qui correspondent à des comportements suspects de l'utilisateur courant. Le nombre et/ou la mise à jour de ces modèles peut être déterminé lors de la configuration du système, en fonction des catégories d'utilisateur du dispositif, ou préalablement par un opérateur de service.

Selon les exemples de la figure 5, comme précédemment indiqué pour la figure 1, il est montré des transitions uniquement entre des catégories permettant de détecter un comportement suspect.

Les données enregistrées pour chaque modèle peuvent comprendre par exemple au moins une donnée parmi les données suivantes : au moins une catégorie d'utilisateur, au moins une durée (par exemple une première durée (seuil) pour qu'une requête soit considérée ou non comme transitoire, une première durée d'inactivité à partir de laquelle une fenêtre temporelle est réinitialisée) entre deux requêtes (par exemple entre deux requêtes de différents catégories), au moins un séquencement entre au moins deux catégories, un premier nombre et/ou une première fréquence de changement de catégories (valeur seuil) à partir de laquelle un comportement est considéré comme suspect.

La figure 5A représente un premier modèle de comportement suspect. Il correspond à une ou plusieurs requêtes vers du contenu adulte pendant une durée non transitoire soit plusieurs secondes au minimum puis à une consultation sur une durée non transitoire, plus longue, de contenu enfant. Ce comportement peut faire partie des comportements suspects car rarement un adulte consulte de manière prolongée du contenu enfant. Un utilisateur potentiel du terminal partagé qui aurait un tel comportement est donc probablement un enfant qui a consulté un site pour adulte avant de consulter un site pour enfant. Il est à noter que le fait qu'il n'y ait pas de temps d'inutilisation du terminal entre les requêtes vers du contenu enfant et vers du contenu adulte peut venir renforcer la détection d'un comportement suspect.

La figure 5B représente un second modèle de comportement suspect. Il correspond à une ou plusieurs requêtes vers du contenu enfant pendant une durée non transitoire, soit plusieurs secondes au minimum, puis à une consultation sur une durée non transitoire, plus longue, de contenu adulte. De la même manière que le comportement de la figure 5a, ce comportement peut faire partie des comportements suspects car rarement un adulte consulte de manière prolongée du contenu enfant. Un utilisateur potentiel du terminal partagé qui aurait un tel comportement est donc probablement un enfant qui a consulté un site pour adulte après avoir consulté un site pour enfant.

La figure 5C représente un troisième modèle de comportement suspect. Il correspond à une séquence alternant respectivement :

- une ou plusieurs requêtes à des contenus adulte pendant une durée totale non transitoire,
- une ou plusieurs requêtes à du contenu enfant, pendant une durée relativement courte mais non transitoire,
- une ou plusieurs requêtes à des contenus adulte pendant une durée non transitoire,
- une ou plusieurs requêtes à des contenus enfants pendant une durée non transitoire, longue de plusieurs minutes ou plus,
- une ou plusieurs requêtes à des contenus adulte, pendant une durée non transitoire.

Le comportement de la figure 5C peut faire partie des comportements suspects car rarement un adulte consulte de manière prolongée et par intermittence du contenu enfant. Un utilisateur potentiel du terminal partagé qui aurait un tel comportement serait donc probablement un enfant qui consulterait au moins un site pour adulte.

La figure 5D représente un quatrième modèle de comportement suspect. Il correspond à plusieurs séquences alternant respectivement une ou plusieurs requêtes vers du contenu adolescent pendant une durée suffisamment longue, supérieure à plusieurs secondes puis une ou plusieurs requêtes à des contenus adulte pendant quelques secondes mais de durée supérieure à une durée d'une ou deux secondes qui pourraient laisser penser à une requête faite par inadvertance. Le comportement de la figure 5d peut donc laisser penser qu'un utilisateur potentiel du terminal partagé qui aurait un tel comportement est un adolescent ayant consulté du contenu pour adulte.

Ainsi, dans certains modes de réalisation, un comportement suspect peut être détecté en fonction au moins d'une fréquence de changement de catégorie des contenus associés à au moins deux requêtes. Comme le montre l'exemple de la figure 5d, une fréquence de changement de catégorie de contenu importante peut permettre de détecter un comportement suspect et de générer une alerte. Par fréquence de changement importante, il est par exemple entendu, un changement de catégorie toutes les 5 minutes au moins pour une fenêtre temporelle de 15 minutes, un changement toutes les 10 minutes au moins pour une fenêtre temporelle de 60 minutes.

Les figures 5E et 5F représentent deux modèles d'exemples de comportement suspect dans un autre environnement que celui du contrôle parental, à savoir celui de l'enseignement. A cet effet, les catégories définies par le module MOD_SEQ sont « enseignant » et « étudiant ».

La figure 5E représente un premier modèle de comportement suspect dans l'environnement enseignement. Il correspond à une séquence alternant respectivement :

- une ou plusieurs requêtes à du contenu étudiant pendant une durée non transitoire,
- une ou plusieurs requêtes à du contenu enseignant pendant une durée non transitoire de quelques secondes, inférieure à la durée précédente de consultation de contenu étudiant, ,
- une ou plusieurs requêtes à du contenu étudiant pendant une non transitoire,
- une ou plusieurs requêtes à du contenu enseignant pendant une durée non transitoire, inférieure à la durée précédente de consultation de contenu étudiant,
- une ou plusieurs requêtes à du contenu étudiant pendant une non transitoire.

Le comportement représentatif de la figure 5E peut donc laisser penser à un étudiant qui accède à du contenu pour enseignant. Ici, il peut par exemple s'agir d'accès à des applications lorsque l'on parle de requêtes.

La figure 5F représente un second modèle de comportement suspect dans l'environnement enseignement. Il correspond à une séquence alternant respectivement :

- une ou plusieurs requêtes à du contenu enseignant pendant une durée non transitoire,
- une ou plusieurs requêtes à du contenu étudiant pendant une durée non transitoire, supérieure à la durée précédente de la séquence,
- une ou plusieurs requêtes à du contenu enseignant, pendant une durée non transitoire, de quelques secondes, inférieure à la durée précédente de consultation de contenu étudiant,

  - - une ou plusieurs requêtes à du contenu étudiant pendant une durée non transitoire.

Le comportement représentatif de la figure 5F peut donc laisser penser à un étudiant qui accède à du contenu pour enseignant.

Un ensemble de conditions peuvent permettre des caractériser un comportement suspect :

- Soit N le nombre de changements de catégories avec retour à la catégorie initiale, sur une fenêtre temporelle donnée de durée limitée T (par exemple passage de la catégorie « enfant » à la catégorie « adulte » puis retour à la catégorie « enfant »).

Selon une première condition, N peut avoir une valeur minimale ($N \geq N_{min}$), c'est-à-dire qu'il faut observer un nombre minimum de changements de catégories avec retour à la catégorie initiale pendant la fenêtre d'observation , $N_{min}$. est un entier tel que $N_{min} \geq 1$, par exemple $N_{min}. = 3$.

Selon une deuxième condition, les changements de catégories peuvent avoir une durée minimale ($D_m$) pour être pris en considération dans le calcul de N : dans l'exemple ci-dessus, le plateau « état adulte » a une durée minimale, par exemple $D_m$ = 5 secondes.

Selon une troisième condition, les N changements de catégories peuvent se produire sur une fenêtre d'observation glissante, de durée limitée T (par exemple T = 30 minutes).

Ainsi, il peut exister un lien entre T (durée de la fenêtre d'observation glissante) et N (nombre de changements de catégories) :

$$[MATH.\ 1]\ T=\sum_{i=1}^{n}\alpha i+\sum_{i=1}^{m}\beta i$$

$$[MATH.\ 2]\ N=ARRONDI.INF\left(\frac{n+m}{2}\right),$$

où ARRONDI.INF est l'arrondi à l'entier inférieur ; $\alpha i$ et $\beta i$ étant respectivement la durée des requêtes d'un premier contenu et les requêtes d'un second contenu, entre chaque changement de catégorie de contenu, n représentant le nombre de périodes de requêtes de contenu de la première catégorie, entrecoupées de m périodes de requêtes de contenu de la seconde catégorie.

La figure 6 représente un mode de réalisation d'un procédé selon la présente divulgation. Ce procédé est de préférence mis en oeuvre par un ou plusieurs terminaux 1 ou la passerelle d'accès 2.

La fenêtre temporelle peut comprendre par exemple des requêtes successives à du contenu, c'est-à-dire que la fenêtre temporelle ne comprend pas de période d'inactivité du dispositif émettant les requêtes.

Selon un autre exemple, la fenêtre temporelle peut comprendre des requêtes étalées sur des périodes d'activité et d'inactivité du dispositif émettant les requêtes. Les périodes d'inactivité pouvant éventuellement correspondre à un changement d'utilisateur du dispositif, le procédé peut comprendre optionnellement, dans certains modes de réalisation, un filtrage de ces périodes d'inactivité et/ou une réinitialisation de la fenêtre temporelle après une certaine durée d'inactivité. Ce filtrage est/ou cette réinitialisation peut être optionnel, dans certains modes de réalisation.

Le procédé comprend une étape E1 de souscription à un service de détection de comportement suspect. Cette étape peut être optionnelle dans certains modes de réalisation, par exemple lorsque l'utilisateur télécharge un tel service en ligne, telle une application et n'a donc pas besoin de souscrire à un service payant par exemple. Préférentiellement, cette étape est mise en oeuvre par le module MOD_SOUSC décrit précédemment.

Lors d'une étape E2, une ou plusieurs requêtes d'accès à des contenus sont reçues sur au moins une fenêtre temporelle. Ces requêtes d'accès sont des requêtes d'accès à du contenu associé à une catégorie. Comme mentionné précédemment par requête à des contenus il peut aussi être compris l'utilisation d'applications. Ces requêtes sont transmises au réseau extérieur par la passerelle 2. Elles sont également collectées par le module MOD_COL décrit précédemment. Optionnellement, les requêtes collectées peuvent en outre être filtrées par un module de filtrage, telle module MOD_FILT décrit en figure 4, pour ne sélectionner, pour la suite des étapes du procédé, que les requêtes venant de certains dispositifs, par exemple des dispositifs partagés ou une sélection des dispositifs partagés ou les requêtes vers des contenus de certaines catégories, par exemple ne pas conserver la catégorie « tous utilisateurs » (pour un contenu de type météorologie ou cuisine par exemple).

Les étapes suivantes E3, E4 et E5 permettent la génération d'une alerte fonction au moins d'une fréquence de changement de catégorie des contenus associés à au moins deux requêtes et/ou du temps écoulé entre deux requêtes. De tels alertes peuvent par exemple être générées dans les différents modes de réalisation cités ci-après à titre d'exemple en lien avec l'étape de détermination E3.

Selon au moins un mode de réalisation, lors de l'étape E3, suite à la réception d'une séquence de requêtes successives pendant une période temporelle lors de l'étape E2, le procédé peut comprendre la détermination sur la fenêtre temporelle d'informations de séquencement déterminées à partir de la fréquence de changement de catégories de contenu associée à au moins deux requêtes et/ou du temps écoulé entre deux requêtes.

Selon au moins un mode de réalisation, des modèles de comportement suspects sont préalablement déterminés, par exemple par le module de séquencement MOD_MODELE précédemment décrit. Ces modèles sont déterminés en fonction des catégories, des fréquences de changement d'une catégorie à une autre pour les requêtes reçues, et/ou du temps écoulé entre deux requêtes reçues. Les informations de séquencement sont obtenues en mémorisant les requêtes, les catégories associées et la fréquence de changement et/ou du temps écoulé entre deux requêtes reçues. La fenêtre temporelle d'observation peut être notamment une fenêtre glissante dans le temps, et par exemple être une fenêtre d'observation activée en permanence. Les requêtes issues du terminal sont observées et comparées en permanence avec les modèles enregistrés.

Lorsqu'une comparaison est positive, étape E4, un comportement suspect est détecté. Une alerte est générée, fonction du au moins un modèle et des requêtes reçues pendant la période temporelle. On passe ensuite à l'étape E5. Par ailleurs, même si la comparaison est positive, la fenêtre peut rester active et le procédé de détection de comportement suspect peut rester actif. Lorsque la comparaison est négative, alors la fenêtre temporelle reste ouverte.

La comparaison faite lors de l'étape E4 peut par exemple mesurer une distance entre le modèle le plus proche et le séquencement des requêtes et lorsque cette distance est inférieure à un seuil, déterminer un comportement suspect. Les modèles constituent des gabarits de comportement. Les périodes indiquées dans les modèles des figures 5 et les périodes indiquées dans les comportements des figures 1 sont différentes. Ainsi, cette comparaison peut prendre en compte chaque période de temps passée pour chaque catégorie des requêtes utilisateur et ainsi comparer un comportement à un ou plusieurs modèles en comparant le temps de chaque période au temps d'un modèle correspondant. Le modèle de comparaison peut prendre en compte la forme globale des modèles et la comparer à la forme constituée par les requêtes de l'utilisateur.

Prenons, à titre d'exemple, un comportement utilisateur pour lequel la comparaison avec informations de séquencement associées montre que le modèle le plus proche est celui de la figure 1C.

Dans un premier temps, un comportement enfant pendant une durée ($\gamma$1), suivi immédiatement d'un comportement adulte pendant une durée ($\gamma$2) est détecté.

On se place dans le cas où $\gamma$1 et $\gamma$2 sont des durées (par exemple supérieures à 3 secondes.), qui ne sont pas considérés comme des périodes transitoires, permettant d'écarter le cas de l'accès à un contenu par erreur ou inadvertance (le cas d'un enfant qui clique par inadvertance sur un contenu adulte, s'en rend compte immédiatement et ferme immédiatement l'application).

Immédiatement après $\gamma$2, une possibilité de comportement suspect est détectée car un comportement enfant suivi immédiatement d'un comportement adulte est observé et le cas de l'accès à un contenu par erreur a été exclu. Il s'agit d'une possibilité de comportement suspect, mais il peut aussi s'agir d'un simple changement d'utilisateur du terminal, par exemple le passage d'un utilisateur enfant à un utilisateur adulte. Il y a donc un risque de détection erronée (aussi appelée « faux positif »). Dans un tel mode de réalisation, le système peut générer alors uniquement une alerte locale et transmettre une notification sur le terminal de l'utilisateur, par exemple par l'affichage d'un message à l'écran et ne pas transmettre une alerte à un terminal distant (celui de l'utilisateur administrateur ou du parent). Dans certains modes de réalisation, la génération d'une alerte peut donner lieu à un enregistrement de l'alerte dans un fichier de traces. Selon les modes de réalisation, cet enregistrement peut être systématique, même lorsque l'alerte est uniquement locale (pour un suivi fin des requêtes effectuées depuis le terminal), ou ne pas être effectué pour une alerte locale (pour ne pas « surcharger » le fichier de traces avec des « faux positifs »).

Les périodes suivantes d'observation $\gamma$3, $\gamma$4, $\gamma$5 viennent renforcer une détection de comportement suspect car le séquencement d'une seconde transition enfant pendant la période $\gamma$3, puis adulte pendant la période $\gamma$4 puis enfant pendant une période $\gamma$5, est considéré comme caractéristique d'un enfant qui accède à des contenus adultes.

Dans cet exemple, $\gamma$3, $\gamma$4 et $\gamma$5 sont bien tous les trois supérieurs à une durée transitoire, ce qui permet d'écarter le cas de l'accès à un contenu par erreur.

Puisque la détection de comportement suspect est ainsi renforcée pendant les périodes $\gamma$3, $\gamma$4 et $\gamma$5, une notification est transmise à l'issue de la période $\gamma$5 à un terminal distant. La forme de cette notification peut varier selon les modes de réalisation.

Selon au moins un mode de réalisation, à l'étape E3, lorsque les requêtes sont émises par un terminal, la détermination d'un comportement suspect est relative à un comportement suspect d'un utilisateur du terminal pendant au moins une période temporelle. Les modèles sont alors associés par exemple à un profil utilisateur. En effet, on peut déterminer à partir des modèles présentés en figure 5a, 5b, 5c qu'il s'agit d'un modèle associé à un profil enfant, alors que le modèle de la figure 5d est associé à un profil adolescent. De même, les profils des figures 5e et 5f sont associés à des profils étudiants. Selon au moins un mode de réalisation, le procédé peut comprendre la génération d'une alerte prenant en compte un profil de l'utilisateur du terminal basé sur des informations de séquencement des requêtes reçues préalablement à ou pendant ladite période temporelle.

Selon au moins un mode de réalisation, le procédé peut comprendre :

- la détermination du profil de l'utilisateur du terminal lors d'au moins une période temporelle à partir des informations de séquencement des requêtes reçues préalablement à ou pendant la période temporelle. Il peut en effet être prévu de déterminer préalablement à toute surveillance, qui est l'utilisateur du terminal. Comme on l'a vu précédemment, une ou plusieurs requêtes à des contenus enfants pendant une durée longue, non-transitoire, peut permettre de déterminer que le profil de l'utilisateur est un profil enfant. Le profil de l'utilisateur peut être lié à l'âge de l'utilisateur ou dans le cas de l'université, à la fonction de l'utilisateur.

- la comparaison des informations de séquencement à au moins un modèle prend en compte le profil utilisateur déterminé. Ainsi, la méthode est plus robuste car elle détecte préalablement avec plus de certitude dans quelle catégorie se trouve l'utilisateur. Ceci peut rendre plus simple la comparaison ultérieure. La comparaison peut être faite lors d'une étape E4.

Selon au moins un mode de réalisation de l'étape E3, les modèles peuvent ne pas être déterminés préalablement. Dans ce mode de réalisation, le module MOD_COMP peut se baser uniquement sur les informations de séquencement déterminées en les analysant au fur et à mesure de leur réception. Par exemple, dans un tel mode de réalisation, le module MOD_COMP peut se baser sur des changements de catégories des requêtes reçues, la fréquence de changement de catégorie des contenus demandés et/ou le temps écoulé entre chaque changement de catégorie. Dans certains modes de réalisation en lien avec un contrôle parental, il peut être notamment possible de détecter un comportement suspect en détectant une ou plusieurs requêtes d'accès à du contenu enfant pendant une durée non transitoire puis une requête d'accès à du contenu adulte sur un temps moins long que la durée précédente pendant laquelle du contenu enfant a été demandé, puis de nouveau une ou plusieurs requêtes d'accès vers du contenu enfant pendant une période de temps non transitoire et plus importante que la durée pendant laquelle du contenu adulte a été demandé. Le procédé peut par exemple utiliser un algorithme de corrélation des fréquences de passage entre catégorie et des temps d'utilisation par catégorie.

L'algorithme utilisé peut par exemple ne pas prendre en compte les requêtes transitoires, telles que définies précédemment et/ou tenir compte d'un nombre et/ou d'une fréquence de requêtes transitoires. Bien entendu, si ces requêtes transitoires sont très fréquentes, par exemple lorsqu'il est détecté qu'un utilisateur est un enfant car les requêtes sont des requêtes de contenu de catégorie « enfant » et qu'il y a fréquemment, toutes les minutes par exemple, des requêtes transitoires vers des contenus de catégorie « adulte », une détermination de comportement suspect peut être faite. Selon cet exemple, le procédé peut détecter un comportement suspect si la fréquence de changement de catégorie de contenu est élevée sur la fenêtre temporelle. Par exemple par fréquence élevée, on peut dire que toutes les 20 secondes, un changement de catégorie est détecté sur une fenêtre temporelle de 10 minutes.

A l'opposé, si une seule requête transitoire apparait pendant une longue période de temps, pendant une fenêtre temporelle, alors aucune notification n'est émise.

L'algorithme peut prendre en compte les durées entre des changements de catégorie de contenu. Par exemple, si les requêtes sont des requêtes associées à du contenu enfant, pendant une période de temps supérieure à plusieurs secondes et que plusieurs fois, par exemple pendant des périodes de durée inférieure aux durées associées à des requêtes de contenu enfant, il y a des requêtes associées à du contenu adulte, alors un comportement suspect peut être déterminé lors de l'étape E4. Selon cet exemple, le procédé peut détecter un comportement suspect si pendant une fenêtre temporelle, les requêtes à du contenu d'une certaine catégorie sont effectuées pendant une durée courte et des requêtes à du contenu d'une autre catégorie sont effectuées pendant une durée longue.

Le procédé comprend également, de manière optionnelle, une étape E5 de transmission d'une notification, ou de l'alerte générée, lorsqu'un comportement suspect a été déterminé. Cette notification peut être transmise

- au terminal ayant émis les requêtes, ou
- à un autre terminal que le terminal ayant émis les requêtes, par exemple un terminal d'un administrateur du réseau local, qui par exemple peut être un parent dans le cadre du contrôle parental, ou
- au terminal ayant émis les requêtes et à un terminal distant.

Cet « autre » terminal peut par exemple être un terminal distant, non connecté au réseau local. Cette notification peut être adressée à une autre personne déclarée par exemple lors de la souscription au service. Le module de souscription MOD_SOUSC peut également prévoir que cette notification ne soit transmise que suite à la détermination d'un comportement suspect sur au moins deux fenêtres temporelles, pouvant par exemple être disjointes dans le temps.

Comme mentionné ci-dessus, la notification peut être transmise au terminal surveillé, ceci afin d'avertir l'utilisateur que son comportement a été détecté comme suspect. Par exemple, lors d'une première détection d'un comportement suspect, une notification est transmise uniquement au terminal ayant émis les requêtes et lors d'une seconde détection (ou en cas de fenêtre temporelle continue si le comportement suspect persiste), elle peut transmise alternativement ou en complément à un autre terminal.

La notification locale peut optionnellement être « acquittable » par l'utilisateur (par exemple par saisie d'un mot de passe) afin d'éviter la génération de nouvelles notifications (par éviter de gêner un utilisateur « habilité » du fait de la détection de « faux positifs »).

La notification peut être transmise sous différentes formes, choisies parmi :

- un message texte,
- un courrier électronique,
- un message destiné à être affiché sur un terminal,
- un message destiné à une application enregistrée sur un terminal.

Par message destiné à être affiché sur un terminal, on entend par exemple l'ouverture d'une fenêtre sur un écran de l'utilisateur du terminal ou sur un écran du terminal autre.

Dans un mode de réalisation, la génération d'une alerte comprend l'enregistrement d'une information relative à l'alerte, l'enregistrement pouvant être fait dans le terminal générant les requêtes ou dans un autre terminal distant, ou dans les deux.

Dans certains modes de réalisation, combinable avec les modes de réalisation décrits précédemment, un score de confiance peut être associé à la détection d'un comportement suspect. Lorsque ce score de confiance est inférieur à une première valeur (ou seuil), la génération d'une alerte peut comprendre la transmission d'une notification uniquement au terminal émetteur des requêtes. Lorsque ce score de confiance est supérieur au seuil ou à une seconde valeur (ou seuil), éventuellement égale à la première valeur, la génération d'une alerte peut comprendre la transmission d'une notification au terminal émetteur des requêtes et à un terminal autre tel que celui d'un administrateur ou celui d'un utilisateur dont le profil est associé à une autre catégorie

Dans certains modes de réalisation, un nombre maximal de notifications peut être paramétré, ou un nombre maximal par jour, par exemple 5 notifications. Des restrictions d'accès à des sites distants depuis le terminal peuvent par exemple être mises en oeuvre, dans certains modes de réalisation, une fois ce nombre maximal atteint.

Il est important de noter que la fenêtre temporelle est activée et glissante. L'observation sur une fenêtre temporelle peut être faite tant qu'aucun comportement suspect n'est déterminé et continuer au-delà, l'observation peut donc être faite de manière continue.

## Revendications

1. Procédé d'alerte mis en oeuvre dans un dispositif électronique comprenant:

   - une réception, sur au moins une fenêtre temporelle, d'une pluralité de requêtes d'accès à des contenus,
   - une génération d'une alerte fonction au moins d'une fréquence de changement de catégorie de contenu entre des contenus associés à au moins deux desdites requêtes et/ou du temps écoulé entre deux desdites requêtes.

2. Procédé selon la revendication 1 dans lequel ladite fenêtre temporelle ne comprend pas de période d'inactivité dudit dispositif électronique.

3. Procédé selon l'une des revendications précédentes comprenant

   - la détermination d'au moins un modèle, fonction desdites catégories, de fréquences de changement d'une catégorie à une autre de requêtes d'accès à du contenu, et/ou du temps écoulé entre deux requêtes,
   - la génération d'une alerte étant déterminée à partir dudit au moins un modèle et desdites requêtes reçues sur ladite au moins une fenêtre temporelle.

4. Procédé selon la revendication 3 dans lequel

   - lesdites requêtes sont émises par un terminal et ladite alerte est relative à au moins un accès d'un utilisateur dudit terminal pendant ladite au moins une période temporelle,
   - lesdits modèles sont associés à un profil utilisateur,
   - ladite génération d'une alerte prenant en compte un profil de l'utilisateur du terminal basé sur des informations de séquencement desdites requêtes reçues préalablement à ou pendant ladite période temporelle.

5. Procédé selon la revendication 3 dans lequel ladite génération d'une alerte tient au moins compte d'une distance entre ledit au moins un modèle et ledit séquencement desdites requêtes reçues pendant ladite période temporelle.

6. Procédé selon l'une des revendications 3 à 5 dans lequel ledit profil utilisateur est lié à l'âge ou/et à la fonction dudit utilisateur et lesdites catégories sont liées à l'âge ou à la fonction dudit utilisateur, lesdites catégories étant paramétrables.

7. Procédé selon l'une des revendications précédentes dans lequel la génération d'une alerte comprend un ou plusieurs parmi :

   - une transmission d'au moins une notification à un terminal ayant émis lesdites requêtes,
   - une transmission d'au moins une notification à un terminal administrateur différent dudit terminal ayant émis les requêtes, lesdites notifications pouvant être transmises sous une ou plusieurs formes choisies parmi :
   - un message texte,
   - un courrier électronique,
   - un message destiné à être affiché sur un terminal,
   - un message destiné à une application enregistrée sur un terminal.

8. Procédé selon la revendication 7 dans lequel ladite réception et ladite génération d'une alerte sont effectuées sur une pluralité de fenêtres temporelles, ladite transmission d'au moins une notification étant déclenchée suite à la génération d'une alerte sur au moins deux fenêtres temporelles.

9. Procédé selon l'une quelconque des revendications précédentes dans lequel la génération d'une alerte comprend l'enregistrement d'une information relative à ladite alerte dans ledit dispositif ou dans un dispositif distant.

10. Procédé selon l'une des revendications précédentes dans lequel la génération d'une alerte est associée à un score de confiance, et

   - lorsque le score de confiance est inférieur à un premier seuil, la génération d'une alerte comprend la transmission d'une notification audit terminal ayant émis les requêtes et

- - lorsque le score de confiance est supérieur à un second seuil, la génération d'une alerte comprend la transmission d'une notification audit terminal ayant émis les requêtes et à un second terminal différent dudit terminal ayant émis les requêtes.

11. Procédé selon la revendication 7 dans lequel un nombre maximal de notifications transmises sur une durée donnée peut être paramétré et des restrictions d'accès à au moins un contenu peuvent être déclenchées une fois ce nombre maximal atteint.

12. Procédé selon l'une des revendications précédentes comprenant l'activation de la fenêtre temporelle, ladite fenêtre temporelle pouvant être glissante.

13. Dispositif de génération d'une alerte comprenant un ou plusieurs processeurs configurés ensemble ou séparément pour:

    - recevoir, sur au moins une fenêtre temporelle, une pluralité de requêtes d'accès à des contenus,
    - générer une alerte fonction au moins d'une fréquence de changement de catégorie de contenu entre des contenus associés à au moins deux desdites requêtes et/ou du temps écoulé entre deux desdites requêtes.

14. Programme d'ordinateur comprenant des instructions pour l'exécution des étapes du procédé selon l'une des revendications 1 à 12, lorsque ledit programme est exécuté par un ordinateur.

15. Support d'enregistrement lisible par un ordinateur sur lequel est enregistré un programme d'ordinateur comprenant des instructions pour l'exécution des étapes du procédé selon l'une des revendications 1 à 12.

[Fig. 1A-1D]

1A

1B

1C

1D

[Fig. 2]

[Fig. 3]

[Fig. 4]

[Fig. 5A-5F]

5A

5B

5C

5D

5E

5F

[Fig. 6]

# EP 4 287 052 A1

Europäisches
Patentamt

European
Patent Office

Office européen
des brevets

# RAPPORT DE RECHERCHE EUROPEENNE

Numéro de la demande

EP 23 17 3843

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 060 184 A1 (ORANGE [FR]) 15 juin 2018 (2018-06-15) | 1,13-15 | INV. G06F21/56 |
| Y | * page 1 - page 15 * | 2-12 | G06F21/60 G06F21/62 |
| Y | AU 2019 100 493 A4 (APPLE INC [US]) 20 juin 2019 (2019-06-20) * alinéa [0349] - alinéa [0354] * * alinéa [0398] - alinéa [0410] * | 2,4 | |
| Y | NGUYEN TOAN ET AL: "Kid on the phone! Toward automatic detection of children on mobile devices", , 5 août 2018 (2018-08-05), pages 1-14, XP093011333, https://arxiv.org/pdf/1808.01680.pdf Extrait de l'Internet: URL:https://arxiv.org/pdf/1808.01680.pdf [extrait le 2023-01-03] * page 1 - page 10 * | 3,5,7-12 | |
| Y | SHAW ALEX ALEXSHAW@UFL EDU ET AL: "Analyzing the articulation features of children's touchscreen gestures", PROCEEDINGS OF THE 2017 CHI CONFERENCE ON HUMAN FACTORS IN COMPUTING SYSTEMS , CHI '17, ACM PRESS, NEW YORK, NEW YORK, USA, 31 octobre 2016 (2016-10-31), pages 333-340, XP058537852, DOI: 10.1145/2993148.2993179 ISBN: 978-1-4503-4655-9 * abstract; Introduction; Sections 4-5 * | 6 | DOMAINES TECHNIQUES RECHERCHES (IPC) G06F H04L |

Le présent rapport a été établi pour toutes les revendications

| Lieu de la recherche | Date d'achèvement de la recherche | Examinateur |
|---|---|---|
| Munich | 19 septembre 2023 | Ghani, Hamza |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

19

EP 4 287 052 A1

## ANNEXE AU RAPPORT DE RECHERCHE EUROPEENNE
## RELATIF A LA DEMANDE DE BREVET EUROPEEN NO.

EP 23 17 3843

19-09-2023

| Document brevet cité au rapport de recherche | | Date de publication | Membre(s) de la famille de brevet(s) | | Date de publication |
|---|---|---|---|---|---|
| FR 3060184 | A1 | 15-06-2018 | AUCUN | | |
| AU 2019100493 | A4 | 20-06-2019 | AU | 2019100493 A4 | 20-06-2019 |
| | | | AU | 2019265433 A1 | 26-11-2020 |
| | | | AU | 2022215188 A1 | 01-09-2022 |
| | | | KR | 20230035468 A | 13-03-2023 |

EPO FORM P0460